(19) Europäisches Patentamt
European Patent Office
Office européen des brevets

(11) **EP 3 926 308 B1**

(12) **EUROPÄISCHE PATENTSCHRIFT**

(45) Veröffentlichungstag und Bekanntmachung des Hinweises auf die Patenterteilung:
**06.03.2024  Patentblatt 2024/10**

(21) Anmeldenummer: **21174947.8**

(22) Anmeldetag: **20.05.2021**

(51) Internationale Patentklassifikation (IPC):
**B01F 27/724** (2022.01)   **B01F 33/84** (2022.01)
**B01F 35/21** (2022.01)    **B29B 7/72** (2006.01)
**B30B 11/08** (2006.01)    **B30B 15/26** (2006.01)
**G01F 1/76** (2006.01)     **G01G 17/00** (2006.01)
**G01G 19/24** (2006.01)    **G05B 19/042** (2006.01)
**G05D 11/13** (2006.01)    **A61J 3/10** (2006.01)
**B01F 35/22** (2022.01)    **B29B 7/00** (2006.01)

(52) Gemeinsame Patentklassifikation (CPC):
**G05D 11/132; A61J 3/10; B01F 27/724;**
**B01F 33/84; B01F 35/2117; B01F 35/2202;**
**B30B 11/08; B30B 15/26; G01G 19/24;**
**G05B 19/0426;** A61J 2200/74; B29B 7/007;
B29B 7/72; G01F 1/76; G01G 17/00

(54) **VERFAHREN ZUM BETREIBEN EINER MISCHEINRICHTUNG EINER ANLAGE**

METHOD FOR OPERATING A MIXING DEVICE OF A SYSTEM

PROCÉDÉ DE FONCTIONNEMENT D'UN DISPOSITIF DE MÉLANGE D'UNE INSTALLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2020  DE 102020115919**

(43) Veröffentlichungstag der Anmeldung:
**22.12.2021  Patentblatt 2021/51**

(73) Patentinhaber: **Fette Compacting GmbH**
**21493 Schwarzenbek (DE)**

(72) Erfinder:
• **Walter, Nicolas**
  **22149 Hamburg (DE)**
• **Evers, Alexander**
  **22914 Bargteheide (DE)**

(74) Vertreter: **Hauck Patentanwaltspartnerschaft mbB**
**Postfach 11 31 53**
**20431 Hamburg (DE)**

(56) Entgegenhaltungen:
EP-A1- 0 299 065       WO-A1-2008/149190
WO-A1-2013/182870      US-A- 5 114 630
US-A- 5 132 897        US-A- 5 665 941
US-A1- 2004 002 789

**Beschreibung**

Die Erfindung betrifft ein Verfahren zum Betreiben einer Mischeinrichtung einer Anlage, in der pulverförmiges Produkt zu Erzeugnissen verarbeitet wird, wobei der Mischeinrichtung unterschiedliche pulverförmige Produkte zugeführt werden, und wobei die unterschiedlichen Produkte in der Mischeinrichtung vor dem Verarbeiten zu Erzeugnissen zu einem gemischten Produkt gemischt werden.

In solchen Anlagen werden zum Beispiel pulverförmige Produkte zu Tabletten oder Kapseln verarbeitet. Entsprechend können die Anlagen zum Beispiel eine Tablettenpresse oder eine Kapselfüllmaschine umfassen. Derartige Anlagen weisen oftmals mehrere Produkteinlässe für in der Anlage zu verarbeitendes pulverförmiges Produkt auf. Weiterhin weisen derartige Anlagen oftmals eine Mischeinrichtung auf, in der die verschiedenen zugeführten Produkte zu dem zu verarbeitenden Produkt vermischt werden. Aus der Mischeinrichtung wird das gemischte Produkt dann der Produktionsmaschine zum Verarbeiten zu den Erzeugnissen, zum Beispiel einer Tablettenpresse, beispielsweise einer Rundläufertablettenpresse, zugeführt, wo die Produktmischung verarbeitet, beispielsweise zu Tabletten verpresst, wird. Über einen Auslass gelangen die fertig hergestellten Erzeugnisse aus der Anlage. Solche Anlagen können als kontinuierliche Anlagen ausgebildet sein, bei denen das der Anlage kontinuierlich zugeführte Produkt im Gegensatz zu einem Batch-Prozess kontinuierlich verarbeitet wird, zum Beispiel zu Tabletten oder Kapseln. Weiterhin sind sogenannte Containment-Anlagen bekannt, die durch besondere Abdichtungsmaßnahmen einen Austritt von Produktstaub in die Umgebung weitgehend verhindern.

Insbesondere bei kontinuierlich arbeitenden Anlagen besteht ein Bedürfnis, das der Anlage am Einlass zugeführte Produkt in der Anlage hergestellten Erzeugnissen zuzuordnen. Dies ist erforderlich, wenn Produkt zum Beispiel durch Sensoren der Anlage als fehlerhaft erkannt wird. In diesem Fall müssen die aus diesem Produkt hergestellten Erzeugnisse, zum Beispiel Tabletten oder Kapseln, aussortiert werden, wobei zur Vermeidung unnötigen Ausschusses möglichst nur die aus der entsprechenden Produktcharge hergestellten Erzeugnisse aussortiert werden sollen. Es besteht entsprechend ein Bedürfnis zur Produktverfolgung in der Anlage sowie den einzelnen Komponenten, insbesondere der Mischeinrichtung.

Es ist möglich, mittels Gewichts- bzw. Massesensoren das Gewicht bzw. die Masse des in der Mischeinrichtung befindlichen Produkts zu messen. Anhand der Information, wie viel Produkt sich in der Mischeinrichtung befindet, kann das Mischverhalten für die Produktverfolgung vorhergesagt werden. Für eine umfassende Produktverfolgung ist es allerdings erwünscht, nicht nur das Gewicht des Produkts in der Mischeinrichtung zu erfassen, sondern auch die in bzw. aus der Mischeinrichtung ein- und ausfließenden Massenströme. Insbesondere ein direktes Messen des aus der Mischeinrichtung austretenden Massenstroms ist derzeit nicht möglich. Die Erfassung des Gewichts des in der Mischeinrichtung befindlichen Produkts insbesondere mittels einer Wägezelle ist besonders bei horizontal ausgerichteten Mischeinrichtungen starken Störungen ausgesetzt. Daher werden sehr langsame Filter eingesetzt, um dennoch eine zuverlässige Aussage zum Gewicht treffen zu können. Durch die geringe Dynamik des gefilterten Messsignals kann das Produktgewicht allerdings abseits des eingeschwungenen Zustands des Systems nicht zuverlässig erfasst werden. Gerade die transienten Zustände des Systems der Mischeinrichtung sind von besonderem Interesse für die Produktverfolgung.

Aus US 5 114 630 A ist ein kontinuierliches Herstell- und Gießereiverfahren bekannt, bei dem unterschiedliche Materialien einer Mischeinrichtung zugeführt und in dieser gemischt werden. Dabei werden zugeführte Materialmengen gemessen und über der Zeit gemittelt. Auf dieser Grundlage erfolgt ein Abgleich der Zusammensetzungsverhältnisse mit diesbezüglichen Spezifikationen. Außerhalb vorgegebener Spezifikationen liegendes Material wird einem Ausschuss zugeführt.

Aus US 5 132 897 A ist eine closed-loop Regelung für eine loss-in-weight Dosiereinrichtung bekannt, wobei die Regelung mit Bezug auf mindestens zwei stochastische Störsignale angepasst wird. Die Störsignale berücksichtigen Störungen einer Wiegeeinrichtung und Materialdichtevariationen.

Ausgehend von dem erläuterten Stand der Technik liegt der Erfindung daher die Aufgabe zugrunde, ein Verfahren der eingangs genannten Art bereitzustellen, mit dem die in bzw. aus der Mischeinrichtung ein- und ausfließenden Massenströme zuverlässig erfasst werden können. Weiterhin ist es eine Aufgabe der Erfindung, eine Produktverfolgung auch in der Mischeinrichtung und auch in transienten Zuständen zuverlässig und in einfacher Weise zu ermöglichen.

Die Erfindung löst die Aufgabe durch den Gegenstand des Anspruchs 1. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass der in die Mischeinrichtung fließende Produkteinlassmassenstrom und das Gewicht bzw. die Masse des in der Mischeinrichtung befindlichen Produkts gemessen werden, dass aus dem gemessenen Produkteinlassmassenstrom anhand eines mathematischen Modells das Gewicht bzw. die Masse des in der Mischeinrichtung befindlichen Produkts und der aus der Mischeinrichtung fließende Produktauslassmassenstrom vorhergesagt werden, und dass die anhand des mathematischen Modells erstellte Vorhersage des Produktauslassmassenstrom anhand des gemessenen Gewichts bzw. der gemessenen Masse des in der Mischeinrichtung befindlichen Produkts korrigiert wird.

Sofern in diesem Zusammenhang von der Messung oder Vorhersage des Gewichts des Produkts gesprochen wird, versteht sich, dass insoweit auch die Messung oder Vorhersage der Masse des Produkts möglich ist. Die Mischeinrichtung ist Teil einer Anlage. Die Anlage umfasst darüber hinaus eine Produktionsmaschine, zum Beispiel eine Tablettenpresse, beispielsweise eine Rundläufertablettenpresse, oder eine Kapselfüllmaschine, in der das der Anlage zugeführte Produkt bzw. die in der Mischeinrichtung hergestellte Produktmischung zu Erzeugnissen, zum Beispiel Tabletten oder Kapseln, verarbeitet wird. Die hergestellten Erzeugnisse können zum Beispiel orale feste Darreichungsformen (Oral Solid Dosages OSD) sein. Die Anlage umfasst mehrere Produkteinlässe für in der Anlage zu verarbeitendes Produkt. Die Mischeinrichtung dient zum Vermischen unterschiedlicher der Anlage zugeführter Produkte. Die unterschiedlichen der Mischeinrichtung zugeführten Produkte können zum Beispiel ein aktiver pharmazeutischer Wirkstoff (Active Pharmaceutical Ingredient API), ein Trägermaterial (Exzipient) und/oder ein Schmiermittel sein. Die unterschiedlichen Produkte werden der Anlage insbesondere über getrennte Produkteinlässe zugeführt, von denen sie der Mischeinrichtung zugeführt werden, wo sie zu der zu verarbeitenden Produktmischung gemischt werden. Die Mischeinrichtung kann zum Beispiel eine Mischschnecke umfassen. Dadurch erfolgt ein gleichzeitiges Fördern des Produkts beim Mischen. Die Mischschnecke kann beispielsweise um eine in horizontaler Richtung verlaufende Achse drehbar in einem ebenfalls horizontal angeordneten Schneckengehäuse angeordnet sein.

Mittels geeigneter, an sich bekannter Messeinrichtungen werden der in die Mischeinrichtung fließende Produkteinlassmassenstrom aus den beiden zu vermischenden Produkten sowie das Gewicht des in der Mischeinrichtung befindlichen Produkts gemessen. Hierzu kann die Mischeinrichtung eine entsprechende Gewichtsmesseinrichtung, wie eine Wägezelle, umfassen. Der Produkteinlassmassenstrom kann durch einen am Einlass der Mischeinrichtung angeordneten Massenstromsensor erfasst werden. Dieser misst die pro definierte Zeiteinheit in die Mischeinrichtung strömende Produktmasse. Aus dem gemessenen Produkteinlassmassenstrom werden erfindungsgemäß anhand eines mathematischen Modells das Gewicht des in der Mischeinrichtung befindlichen Produkts und der aus der Mischeinrichtung herausfließende Produktauslassmassenstrom aus gemischtem Produkt vorhergesagt. Die Vorhersage des Gewichts des in der Mischeinrichtung befindlichen Produkts wird mit den Messwerten der Gewichtsmesseinrichtung verglichen. Ist der vorhergesagte Wert identisch zu dem gemessenen Wert, kann davon ausgegangen werden, dass auch der vorhergesagte Wert für den Produktauslassmassenstrom zutrifft. Wird andererseits eine Abweichung festgestellt zwischen dem vorhergesagten Wert und dem gemessenen Wert für das Gewicht des in der Mischeinrichtung befindlichen Produkts, so erfolgt entsprechend der festgestellten Abweichung eine Korrektur des vorhergesagten Werts für den Produktauslassmassenstrom.

Die Erfindung basiert also auf dem Gedanken, die anhand des mathematischen Modells erstellte Vorhersage anhand der Messung eines der vorhergesagten Parameter, nämlich des Produktgewichts in der Mischeinrichtung, zu verifizieren und gegebenenfalls die Vorhersagewerte zu korrigieren, insbesondere die Vorhersage des nicht messbaren Werts des Produktauslassmassenstroms. Die Vorhersagen und die Korrektur der vorhergesagten Werte erfolgen insbesondere mittels einer Auswerteeinrichtung auf Grundlage von Auswertealgorithmen.

Während anhand von Messwerten für den Produkteinlassmassenstrom und das Gewicht des in der Mischeinrichtung befindlichen Produkts grundsätzlich der Produktauslassmassenstrom bereits berechnet werden kann, ist dies aus den eingangs erläuterten Gründen nur im eingeschwungenen Zustand des Systems und nicht in den besonders interessanten transienten Zuständen zuverlässig möglich. Dieses Problem wird erfindungsgemäß gelöst, indem zunächst allein auf Grundlage des gemessenen Produkteinlassmassenstroms das in der Mischeinrichtung befindliche Produktgewicht und der Produktauslassmassenstrom vorhergesagt werden und lediglich eine Korrektur der vorhergesagten Werte bei Abweichungen zwischen den Vorhersagen für das Gewicht des in der Mischeinrichtung befindlichen Produkts und den entsprechenden Messwerten erfolgt. Anhand des mathematischen Modells wird der wahrscheinlichste Zustand der Mischeinrichtung abgebildet. Dieser Zustand umfasst das Gewicht des in der Mischeinrichtung befindlichen Produkts sowie den Produktauslassmassenstrom. Auf Grundlage des Modells ist das Gewicht des in der Mischeinrichtung befindlichen Produkts dynamisch und dennoch störungsarm verfügbar. Ebenso ist der ausfließende Produktauslassmassenstrom dynamisch und störungsarm verfügbar, auch ohne diesen Wert zu messen. Damit wird erfindungsgemäß das Mischverhalten der Mischeinrichtung sowohl in stationären Zuständen (im eingeschwungenen Zustand des Systems) als auch in transienten Zuständen präzise und dynamisch erfasst. Dadurch wiederum wird auch in der Mischeinrichtung eine robuste und jederzeit zuverlässige Produktverfolgung ermöglicht.

Als mathematische Modellgleichung für das erfindungsgemäße Verfahren kann folgende Gleichung verwendet werden:

$$\frac{dm\_m}{dt} = \frac{dm\_d}{dt} - \frac{dm\_o}{dt}$$

*mit:*

  *m_m: Masse des in der Mischeinrichtung befindlichen Produkts*

m_d: Masse des in die Mischeinrichtung fließenden Produkts

m_o: Masse des aus der Mischeinrichtung fließenden Produkts

Als Startbedingung für die mathematische Modellierung zu Beginn eines Betriebs der Anlage können m_m, m_d und m_o jeweils auf den Wert Null gesetzt sein. Mit Betriebsbeginn der Anlage nimmt der gemessene, in die Mischeinrichtung fließende Produkteinlassmassenstrom positive Werte an und das Gewicht bzw. die Masse des in der Mischeinrichtung befindlichen Produkts sowie des Produktauslassmassenstroms werden vorhergesagt und anhand der ermittelten Messwerte des in der Mischeinrichtung befindlichen Produkts korrigiert, beispielsweise mittels eines unten näher erläuterten Kalman-Filter-Verfahrens. Die vorhergesagten Werte konvergieren entsprechend sukzessive auf die tatsächlichen Werte.

Das mathematische Modell kann auch in einer Zustandsraumdarstellung betrachtet werden. Der Zustandsvektor x ist dann:

$$x = \begin{pmatrix} m\_m \\ \dot{m}\_o \end{pmatrix}$$

mit:

$$\dot{m}\_o = \frac{dm\_o}{dt}$$

Für den Zustandsvektor x wird der wahrscheinlichste Zustand ermittelt aufgrund des gemessenen Gewichts bzw. der gemessenen Masse des in der Mischeinrichtung befindlichen Produkts y = m_m.

Für y gilt dann:

$$y = Cx$$

mit:

$$C = \begin{pmatrix} 1 & 0 \end{pmatrix}$$

Die mathematische Modellgleichung in der Zustandsraumdarstellung ist dann:

$$\dot{x} = Ax + Bu$$

mit:

$$\dot{x} = \frac{dx}{dt}$$

$$u = \dot{m}\_d = \frac{dm\_d}{dt}$$

$$A = \begin{pmatrix} 0 & -1 \\ 0 & 0 \end{pmatrix}$$

$$B = \begin{pmatrix} 1 \\ 0 \end{pmatrix}$$

Als Anfangsbedingung wird für m_m, m_d und m_o, und damit insbesondere x und y, wiederum der Wert Null angenommen. Wiederum konvergiert das mathematische Modell im Zuge des Starts der Anlage auf die tatsächlichen Werte. Insbesondere nimmt mit Betriebsbeginn der Anlage der gemessene, in die Mischeinrichtung fließende Produkteinlassmassenstrom positive Werte an und das Gewicht bzw. die Masse des in der Mischeinrichtung befindlichen Produkts sowie des Produktauslassmassenstroms werden beispielsweise mittels eines unten näher erläuterten Kalman-Filter-Verfahrens vorhergesagt und sukzessive korrigiert.

Gemäß einer Ausgestaltung können die Vorhersage des Gewichts des in der Mischeinrichtung befindlichen Produkts und des Produktauslassmassenstroms sowie die Korrektur der Vorhersage des Produktauslassmassenstroms in Echtzeit erfolgen. Durch die Vorhersage und Korrektur anhand eines mathematischen Modells in Echtzeit wird ein Abgleich des Modells mit weiteren Sensordaten der Anlage ermöglicht, wodurch die Robustheit und Langzeitstabilität des Modells erhöht wird.

Die Korrektur der anhand des mathematischen Modells erstellten Vorhersage des Produktauslassmassenstroms kann gemäß einer besonders praxisgemäßen Ausgestaltung mittels der Methode der kleinsten Quadrate erfolgen.

Gemäß einer weiteren bevorzugten Ausgestaltung können die Vorhersage des Gewichts des in der Mischeinrichtung befindlichen Produkts und des Produktauslassmassenstroms sowie die Korrektur der Vorhersage des Produktauslassmassenstroms mittels eines KALMAN-Filterverfahrens erfolgen. Ein KALMAN-Filter ist ein an sich bekanntes mathematisches Verfahren zur iterativen Schätzung von Systemparametern auf der Basis von fehlerbehafteten Beobachtungen. Mittels eines KALMAN-Filterverfahrens können nicht direkt messbare Systemgrößen geschätzt werden, während Messfehler optimal reduziert werden. Es hat sich herausgestellt, dass mit einem solchen mathematischen Modell besonders zuverlässige Ergebnisse erzielt werden können.

Wie bereits erläutert, können die unterschiedlichen Produkte der Mischeinrichtung über mehrere Produkteinlässe der Anlage zugeführt werden. Die Produkteinlässe können nach einer weiteren Ausgestaltung jeweils mindestens eine Dosierzuführeinrichtung umfassen, insbesondere eine Loss-In-Weight-Dosierzuführeinrichtung. Derartige Dosierzuführeinrichtungen dienen zum dosierten Zuführen von Produkt. Sogenannte Loss-In-Weight-Dosierzuführeinrichtungen (LIW-Feeder) weisen eine Wiegeeinrichtung auf und dosieren das zuzuführende Produkt über eine Gewichtsmessung des in der Dosierzuführeinrichtung befindlichen Produkts.

Wie bereits erläutert, kann die Anlage eine Anlage zur Tablettenherstellung sein, wobei das aus der Mischeinrichtung kommende gemischte Produkt in einer Tablettenpresse zu Tabletten verpresst wird. Bei der Tablettenpresse kann es sich insbesondere um eine Rundläufertablettenpresse handeln. Die Tablettenpresse kann eine Containment-Presse sein, also eine Presse, die durch besondere Abdichtungsmaßnahmen einen Austritt von Produktstaub in die Umgebung weitgehend verhindert.

Es ist auch möglich, dass die Anlage eine Anlage zur Kapselherstellung ist, wobei das aus der Mischeinrichtung kommende gemischte Produkt in einer Kapselfüllmaschine in Kapseln gefüllt wird.

Gemäß einer weiteren Ausgestaltung kann auf Grundlage der gemessenen Werte des Produkteinlassmassenstroms und des Gewichts des in der Mischeinrichtung befindlichen Produkts sowie der korrigierten Vorhersage des Produktauslassmassenstroms der Fortgang des Produkts in der Mischeinrichtung und/oder der Anlage verfolgt werden. Dadurch kann beispielsweise eine als fehlerhaft erkannte Produktcharge in ihrem weiteren Fortgang durch die Mischeinrichtung bzw. die Anlage verfolgt werden. Aus der fehlerhaften Produktcharge hergestellte Erzeugnisse können so zuverlässig identifiziert und unter Minimierung von Ausschuss aussortiert werden.

Zur Verfolgung des Fortgangs des Produkts kann nach einer weiteren Ausgestaltung das in die Mischeinrichtung eintretende Produkt anhand der gemessenen Werte des Produkteinlassmassenstroms in Masseeinheiten aufgeteilt werden, wobei der Fortgang der Masseeinheiten in der Mischeinrichtung anhand der korrigierten Vorhersage des Produktauslassmassenstroms verfolgt wird. Der Produktstrom wird somit anhand der Messdaten des Produkteinlassmassenstroms insbesondere in einer Auswerteeinrichtung der Anlage in aufeinanderfolgende Masseeinheiten aufgeteilt. Anhand der durch das erfindungsgemäße Verfahren bereitgestellten, gegebenenfalls korrigierten Werte des Produktauslassmassenstroms kann der Austritt der betreffenden Masseeinheiten aus der Mischeinrichtung zuverlässig verfolgt werden. Eine massebasierte Produktverfolgung hat beispielsweise gegenüber einer zeitbasierten Produktverfolgung auf Grundlage von Verweilzeitmodellen diverse Vorteile. Insbesondere besitzt sie eine wesentlich geringere Abhängigkeit von dem jeweiligen Betriebspunkt der Anlage, also den jeweiligen Betriebsparametern. Eine Parametrierung des Modells zur Produktverfolgung insbesondere bei einem Produktwechsel oder anderen Abweichungen von einmal festgelegten Betriebsparametern ist daher wesentlich einfacher. Gleichzeitig ist eine besonders zuverlässige Produktverfolgung möglich, so dass zum Beispiel aus einer fehlerhaften Produktcharge hergestellte Erzeugnisse sicher und gezielt identifiziert und aussortiert werden können. Die Masseeinheiten werden dabei in der Auswerteeinheit ähnlich einem Schieberegistermodell durch die Anlage bewegt. Dabei kann für die Verfolgung des Fortgangs der Masseeinheiten in der Mischeinrichtung ein Vermischen unterschiedlicher Masseeinheiten zu neuen Masseeinheiten in der Mischeinrichtung berücksichtigt werden. Für die Berücksichtigung des Vermischens kann ein durch die Mischeinrichtung realisiertes Mischungsverhältnis berücksichtigt werden. Es werden also aus den bei der Mischeinrichtung ankommenden Masseeinheiten neue Masseeinheiten gebildet, die das gemischte Produkt enthalten. Das Mischungsverhältnis der Mischeinrichtung ist dabei abhängig von der Spezifikation der Mischeinrichtung und gegebenenfalls der Zuführrate der einzelnen Produkte. Das Mischungsverhältnis ist für den jeweiligen Prozess also bekannt und kann für die Berücksichtigung des Vermischens entsprechend herangezogen werden. Wenn die Mischeinrichtung zum Beispiel zwei Produkte gleichförmig im Verhältnis 50 % zu 50 % mischt, enthalten die neuen Masseeinheiten jeweils das erste und das zweite Produkt zur Hälfte. Bei anderen durch die Mischeinrichtung realisierten Mischungsverhältnissen erfolgt entsprechend eine andere Aufteilung auf die neuen Masseeinheiten.

Gemäß einer weiteren Ausgestaltung können die über die Produkteinlässe zugeführten Produkte anhand von Messdaten von an den Produkteinlässen angeordneten Einlassmassesensoren in Masseeinheiten aufgeteilt werden, und der Fortgang der Masseeinheiten in der Anlage kann anhand von Messdaten mindestens eines weiteren Massensensors der Anlage verfolgt werden. Besonders geeignet sind insoweit die eingangs erläuterten Loss-In-Weight-Dosierzuführeinrichtungen. Bei diesen kann unmittelbar die ohnehin vorhandene Wiegeeinrichtung als Einlassmassesensor genutzt werden.

Der Fortgang der Masseeinheiten in der Anlage kann nach einer weiteren Ausgestaltung anhand von Messdaten eines an einem Tablettenauslass einer Tablettenpresse angeordneten weiteren Massesensors verfolgt werden. Dieser weitere Massesensor kann zum Beispiel ein Sensor sein, mit dem die Anzahl der aus der Tablettenpresse ausgegebenen Tabletten gezählt wird. Deren Gewicht kann für einen vorgegebenen Prozess als bekannt angenommen werden. Durch die Tablettenzählung kann also eine indirekte Gewichts- bzw. Massebestimmung erfolgen. Es wäre aber natürlich auch möglich, dass der weitere Massesensor die ausgegebenen Tabletten zählt und wiegt. Bei der vorgenannten Ausgestaltung werden die hergestellten Tabletten direkt einer entsprechenden Masseeinheit am Einlass und damit einer entsprechenden Produktcharge zugeordnet.

Nach einer weiteren Ausgestaltung kann der Fortgang der Masseeinheiten in der Anlage anhand von Messdaten eines an einem Auslass einer Kapselfüllmaschine angeordneten weiteren Massesensors verfolgt werden. Dieser weitere Massesensor kann zum Beispiel ein Sensor sein, mit dem die Anzahl der aus der Kapselfüllmaschine ausgegebenen Kapseln gezählt wird. Deren Gewicht kann für einen vorgegebenen Prozess wiederum als bekannt angenommen werden. Durch die Kapselzählung kann also wiederum eine indirekt Gewichts- bzw. Massebestimmung erfolgen. Es wäre aber natürlich auch möglich, dass der weitere Massesensor die ausgegebenen Kapseln zählt und wiegt.

Gemäß einer weiteren Ausgestaltung können die Massen der Masseeinheiten gleich sein. Wenn alle Masseeinheiten die gleiche Masse besitzen, vereinfacht dies die Rückverfolgung, insbesondere die zur Produktverfolgung verwendeten Algorithmen.

Die Masseeinheiten sollten eine ausreichend geringe Masse aufweisen für eine zuverlässige und präzise Produktverfolgung unter Vermeidung unnötigen Ausschusses. Nach einer diesbezüglichen Ausgestaltung kann die Masse der Masseeinheiten in einem Bereich von 1 g bis 20 g, vorzugsweise in einem Bereich von 1 g bis 10 g liegen. Insbesondere können alle Masseeinheiten die gleiche Masse besitzen, wobei diese für alle Masseeinheiten gleiche Masse dann eine Masse in den genannten Bereichen ist.

Die Anlage kann eine Anlage zur kontinuierlichen Verarbeitung des pulverförmigen Produkts zu Erzeugnissen, beispielsweise zur kontinuierlichen Tablettenherstellung oder Kapselfüllung, sein. Wie an sich bekannt, wird bei Anlagen zur kontinuierlichen Herstellung das Produkt im Gegensatz zu einem Batch-Prozess kontinuierlich in die Anlage zugeführt, in dieser kontinuierlich in einer Mischeinrichtung gemischt, und kontinuierlich zu Erzeugnissen verarbeitet. Solche Anlagen können theoretisch endlos laufen, wobei lediglich für einen ausreichenden Produktnachschub an den Produkteinlässen gesorgt werden muss. Sie haben gegenüber Batch-Anlagen diverse Vorteile, wie dem Fachmann an sich bekannt ist. Gerade bei solchen Anlagen zur kontinuierlichen Herstellung ist eine präzise und hochaufgelöste Produktverfolgung, wie sie durch die Erfindung gewährleistet ist, von großer Bedeutung.

Weiterhin kann die Anlage eine sogenannte Containment-Anlage sein, die also aufgrund besonderer Abdichtungsmaßnahmen einen Austritt von Produktstaub aus der Anlage weitgehend unterbindet. Der Containment-Level einer Anlage wird zum Beispiel nach dem sogenannten SMEPAC-Test ermittelt (Standardized Measurement of Equipment Particulate Airborne Concentration). Die bei dem erfindungsgemäßen Verfahren verwendete Anlage kann zum Beispiel einen Containment-Level nach dem SMEPAC-Test von 10 bis 100 $\mu g/m^3$ oder kleiner als 10 $\mu g/m^3$ besitzen.

Ein Ausführungsbeispiel der Erfindung wird nachfolgend anhand von Figuren näher erläutert. Es zeigen schematisch:

Figur 1    eine bei dem erfindungsgemäßen Verfahren verwendete Anlage zur Herstellung von Tabletten mit einer Tablettenpresse in abgewickelter Darstellung des Rotors, und

Figur 2    ein Diagramm zur Veranschaulichung des erfindungsgemäßen Verfahrens.

Soweit nichts anderes angegeben ist, bezeichnen in den Figuren gleiche Bezugszeichen gleiche Gegenstände.

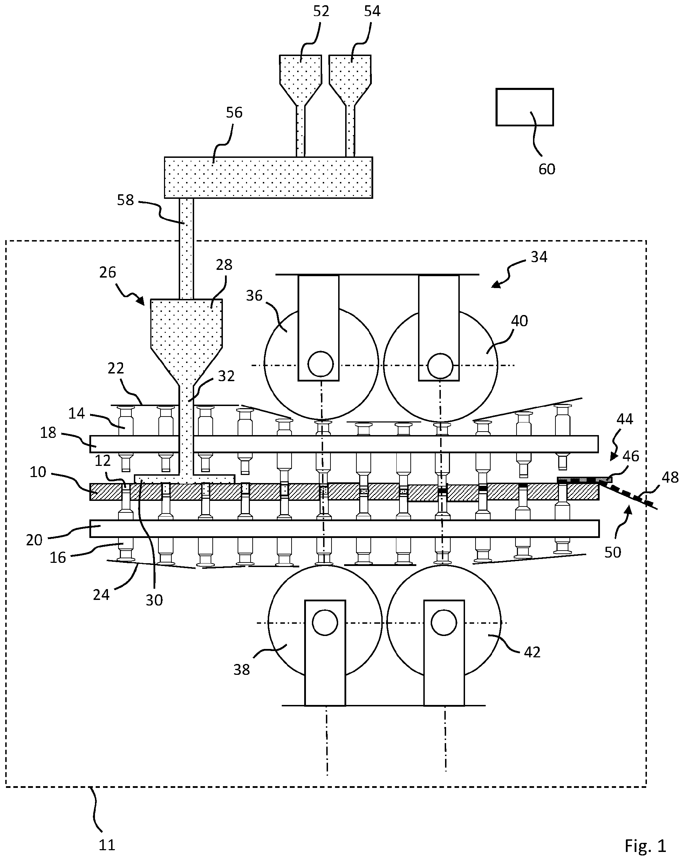

Die in Figur 1 gezeigte Anlage ist eine Anlage zur Tablettenherstellung, in der pulverförmiges Produkt zu Tabletten verpresst wird. Die Anlage umfasst entsprechend eine in einem Gehäuse 11 angeordnete Rundläuferpresse, insbesondere Rundläufertablettenpresse, mit einem durch einen Drehantrieb drehend angetriebenen Rotor mit einer Matrizenscheibe 10, die eine Mehrzahl von Aufnahmen 12 aufweist. Die Aufnahmen 12 können beispielsweise durch Bohrungen der Matrizenscheibe 10 gebildet sein. Weiter umfasst der Rotor eine Mehrzahl von Oberstempeln 14 und Unterstempeln 16, die mit der Matrizenscheibe 10 synchron umlaufen. Die Oberstempel 14 sind in einer oberen Stempelführung 18 axial geführt und die Unterstempel 16 sind in einer unteren Stempelführung 20 axial geführt. Die axiale Bewegung der Oberstempel 14 und Unterstempel 16 im Zuge der Drehung des Rotors wird durch obere Steuerkurvenelemente 22 und untere Steuerkurvenelemente 24 gesteuert. Die Rundläuferpresse umfasst weiterhin eine Fülleinrichtung 26, die ein Füllreservoir 28 und eine Füllkammer 30 aufweist, die über ein Füllrohr 32 verbunden sind. Auf diese Weise gelangt in dem vorliegenden Beispiel pulverförmiges Füllmaterial aus dem Füllreservoir 28 über das Füllrohr 32 schwerkraftbedingt in die Füllkammer 30 und aus dieser über eine an der Unterseite der Füllkammer 30 vorgesehene Befüllöffnung wiederum schwerkraftbedingt in die Aufnahmen 12 der Matrizenscheibe 10.

Die Rundläuferpresse umfasst außerdem eine Druckeinrichtung 34. Die Druckeinrichtung 34 umfasst eine Vordruckeinrichtung mit einer oberen Vordruckrolle 36 und einer unteren Vordruckrolle 38, sowie eine Hauptdruckeinrichtung mit einer oberen Hauptdruckrolle 40 und einer unteren Hauptdruckrolle 42. Darüber hinaus umfasst die Rundläuferpresse eine Auswurfeinrichtung 44 und eine Abstreifeinrichtung 46 mit einem Abstreifelement, das die in der Rundläuferpresse hergestellten Tabletten 48 einer Ablaufeinrichtung 50 zum Abführen aus der Rundläuferpresse zuführt. Die Abstreifeinrichtung 46 kann zum Beispiel ein vorzugsweise sichelförmiges Abstreifelement umfassen, das im Bereich der Auswurfeinrichtung 44 durch die Unterstempel 16 auf die Oberseite der Matrizenscheibe 10 geförderte Tabletten 48 von der Matrizenscheibe 10 abstreift und der Ablaufeinrichtung 50 zuführt.

Das Gehäuse 11 kann gegenüber der Umgebung des Gehäuses 11 unter einem Über- oder Unterdruck stehen. Außerdem kann das Gehäuse 11 dicht gegenüber der Umgebung abgeschlossen sein. Die Rundläuferpresse kann eine sogenannte Containment-Presse sein.

Es wird ausdrücklich darauf hingewiesen. dass die in Figur 1 gezeigte Rundläuferpresse mit ihren erläuterten Eigenschaften lediglich beispielhaft ist. Für die Erfindung ist grundsätzlich auch jede andere Tablettenpresse geeignet. Auch ist für die Erfindung grundsätzlich jede andere Art von Produktionsmaschine geeignet, in der pulverförmiges Produkt zu Erzeugnissen verarbeitet wird, wie beispielsweise eine Kapselfüllmaschine, in der pulverförmiges Produkt in Kapseln gefüllt wird.

Die Anlage umfasst darüber hinaus in dem dargestellten Beispiel zwei Produkteinlässe 52, 54 für zwei unterschiedliche, der Tablettenpresse zum Verpressen zu Tabletten 48 zuzuführende Produkte, beispielsweise einen pharmazeutischen Wirkstoff einerseits und einen Exzipienten andererseits. Die Produkteinlässe 52, 54 können zum Beispiel Dosierzuführeinrichtungen, insbesondere Loss-In-Weight-Dosierzuführeinrichtungen, umfassen. Von den Produkteinlässen 52, 54 gelangen die zugeführten Produkte zu einer Mischeinrichtung 56 der Anlage, in der die Produkte zu der zu verpressenden Produktmischung gemischt werden. Die Mischeinrichtung kann zum Beispiel eine Mischschnecke umfassen. Im dargestellten Beispiel ist die Mischeinrichtung 56 horizontal ausgerichtet. Insbesondere verläuft eine Drehachse einer Mischschnecke der Mischeinrichtung 56 in horizontaler Richtung. Auch das Gehäuse der Mischeinrichtung 56 ist horizontal ausgerichtet. Über eine Zuführleitung 58 wird das aus der Mischeinrichtung 56 austretende gemischte Produkt dem Füllreservoir 28 der Fülleinrichtung 26 zugeführt. Die Anlage umfasst außerdem eine Auswerte- und Steuereinrichtung 60 zum Steuern des Betriebs der Anlage und zur Durchführung des erfindungsgemäßen Verfahrens auf Grundlage von in der Auswerte- und Steuereinrichtung 60 hinterlegten Auswertealgorithmen. Die Produkteinlässe 52, 54, die Fülleinrichtung 26 und die Tablettenpresse, insbesondere ein Tablettenauslass der Tablettenpresse, können jeweils mindestens einen Gewichtssensor umfassen, mit dem das Gewicht von durch die Anlage geführtem Produkt bzw. aus der Anlage ausgegebenen Tabletten direkt oder indirekt bestimmt werden kann. Die Mischeinrichtung 56 besitzt außerdem an ihren Einlässen Massenstromsensoren, mit denen der Produkteinlassmassenstrom des von den Produkteinlässen 52, 54 in die Mischeinrichtung 56 fließenden Produkts gemessen wird. Außerdem besitzt die Mischeinrichtung 56 eine Wägezelle, mit der das Gewicht des in der Mischeinrichtung 56 befindlichen Produkts gemessen wird. Die Auswerte- und Steuereinrichtung 60 ist mit den Massenstromsensoren zum Messen des Produkteinlassmassenstroms, der Wägezelle zum Messen des Gewichts des in der Mischeinrichtung 56 befindlichen Produkts sowie mit den Massesensoren und gegebenenfalls mit weiteren Sensoren der Anlage verbunden. Insbesondere empfängt sie Messdaten der Sensoren und legt sie der Steuerung und Auswertung zu Grunde. Dazu kann die Auswerte- und Steuereinrichtung 60 mit sämtlichen Komponenten der Anlage über entsprechende Verbindungsleitungen verbunden sein.

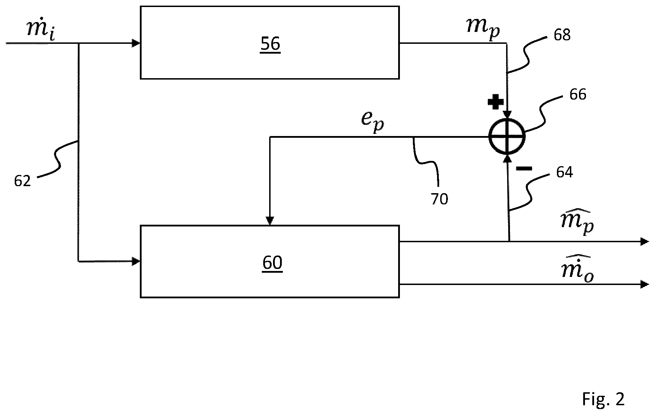

Anhand des Diagramms der Figur 2 soll das erfindungsgemäße Verfahren näher erläutert werden.

In Figur 2 ist mit $\dot{m}_l$ der durch die Massesensoren der Mischeinrichtung 56 gemessene Produkteinlassmassenstrom aus den Produkteinlässen 52, 54 bezeichnet. Dieser Messwert liegt an der Auswerte- und Steuereinrichtung 60 an, wie in Figur 2 durch den Pfeil 62 dargestellt. Anhand des gemessenen Werts für den Produkteinlassmassenstrom $\dot{m}_l$ berechnet die Auswerte- und Steuereinrichtung 60 anhand eines mathematischen Modells einen vorhergesagten Wert für das Gewicht des in der Mischeinrichtung 56 befindlichen Produkts. Dieser Wert ist in Figur 2 mit $\widehat{m_p}$ bezeichnet. Außerdem berechnet die Auswerte- und Steuereinrichtung 60 auf Grundlage des gemessenen Produkteinlassmassenstroms $\dot{m}_l$ einen vorhergesagten Wert für den Produktauslassmassenstrom des gemischten Produkts aus der Mischeinrichtung 56. Dieser Wert ist mit $\widehat{m_o}$ bezeichnet.

Wie in Figur 2 durch den Pfeil 64 veranschaulicht, liegt der vorhergesagte Wert für das Gewicht des in der Mischeinrichtung 56 befindlichen Produkts $\widehat{m_p}$ an einer Vergleichseinrichtung 66 an, die ebenfalls Teil der Auswerte- und Steuereinrichtung 60 sein kann. An der Vergleichseinrichtung 66 liegt andererseits der durch die Wägezelle gemessene Wert für das Gewicht des in der Mischeinrichtung 56 befindlichen Produkts an, wie durch den Pfeil 68 dargestellt. Dieser gemessene Wert ist mit $m_p$ bezeichnet. Ermittelt die Vergleichseinrichtung 66 eine Differenz zwischen dem gemessenen Wert $m_p$ und dem vorhergesagten Wert $\widehat{m_p}$, wird dies als Berechnungsfehler $e_p$ an die Auswerte- und Steuereinrichtung 60 gegeben, wie durch den Pfeil 70 veranschaulicht. Auf Grundlage des Berechnungsfehlers $e_p$ korrigiert die Auswerte- und Steuereinrichtung 60 nach dem mathematischen Modell den berechneten Vorhersagewert des Produktauslassmassenstroms $\widehat{m_o}$. Dieses zu Figur 2 beschriebene Verfahren kann permanent während des Betriebs der Mischeinrichtung bzw. der Anlage ablaufen.

Die beschriebene Vorhersage des Gewichts des in der Mischeinrichtung befindlichen Produkts und des aus der Mischeinrichtung 56 fließenden Produktauslassmassenstroms sowie die Korrektur der Vorhersage des Produktauslassmassenstroms erfolgen vorzugsweise mittels eines KALMAN-Filterverfahrens.

Auf Grundlage des erfindungsgemäßen Verfahrens kann eine Produktverfolgung in der Anlage und insbesondere der Mischeinrichtung 56 in zuverlässiger Weise und auch abseits stationärer Zustände, insbesondere in transienten Zuständen, erfolgen.

Für die Produktverfolgung ist es weiter möglich, dass anhand von Messdaten von an den Produkteinlässen 52, 54 angeordneten Einlassmassesensoren, beispielsweise Masse- bzw. Gewichtssensoren von Loss-In-Weight-Dosierzuführeinrichtungen, das über die Produkteinlässe 52, 54 in die Anlage eingegebene Produkt jeweils in gleichgroße Masseeinheiten aufgeteilt wird. In der durch die Mischeinrichtung 56 gebildeten Dispersionszone werden dann wiederum in der Auswerte- und Steuereinrichtung 60 aus den Masseeinheiten von den beiden Produkteinlässen 52, 54 neue Masseeinheiten gebildet, in denen entsprechend dem bekannten Zuführverhältnis in die Mischeinrichtung 56 Produktanteile aus jeweils zwei Masseeinheiten von den beiden Produkteinlässen 52, 54 enthalten sind. Entsprechend dem ebenfalls bekannten, beispielsweise empirisch ermittelten Mischungsverhältnis der Mischeinrichtung 56 wird das Vermischen der Bestandteile der Masseeinheiten in der durch die Mischeinrichtung 56 gebildeten Dispersionszone berücksichtigt. Anhand des mit dem erfindungsgemäßen Verfahren vorhergesagten und gegebenenfalls korrigierten Produktauslassmassenstroms können die Masseeinheiten entsprechend am Auslass der Mischeinrichtung 56 weiterverfolgt werden. Diese Masseeinheiten werden in ihrem Fortgang durch die Anlage im Weiteren, insbesondere zur Tablettenpresse 62 verfolgt, beispielsweise anhand von Messdaten eines in der Fülleinrichtung 26 der Tablettenpresse angeordneten Massesensors. Über einen weiteren, beispielsweise am Auslass der Tablettenpresse angeordneten Massesensor, der die ausgeworfenen Tabletten zählt und gegebenenfalls zusätzlich ihr Gewicht misst, können die ausgeworfenen Tabletten 48 bestimmten, über die Produkteinlässe 52, 54 zuvor in die Anlage eingegebenen Masseeinheiten und damit der entsprechenden Produktcharge zugeordnet werden. Wird beispielsweise eine oder mehrere Masseeinheiten im Zuge ihres Fortgangs durch die Anlage von Sensoren der Anlage als fehlerhaft erkannt, ist es auf diese Weise möglich, die aus diesen Masseeinheiten hergestellten Tabletten zuverlässig zu identifizieren, so dass diese Tabletten aussortiert werden können. Aufgrund des erfindungsgemäßen Verfahrens ist diese Art der massebasierten Produktverfolgung insbesondere auch in transienten Zuständen jederzeit zuverlässig möglich.

Die Masseeinheiten können sämtlich die gleiche Masse aufweisen. Die Masse der Masseeinheiten kann vorzugweise weniger als 20 g, weiter vorzugsweise weniger als 10 g, beispielsweise etwa 1 g betragen. Die Anlage ist insbesondere eine Anlage zur kontinuierlichen Tablettenherstellung. Es kann sich um eine Containment-Anlage handeln.

Bezugszeichenliste

| | |
|---|---|
| 10 | Matrizenscheibe |
| 11 | Gehäuse |
| 12 | Aufnahmen |
| 14 | Oberstempel |
| 16 | Unterstempel |
| 18 | Obere Stempelführung |
| 20 | Untere Stempelführung |
| 22 | Obere Steuerkurvenelemente |
| 24 | Untere Steuerkurvenelemente |
| 26 | Fülleinrichtung |
| 28 | Füllreservoir |
| 30 | Füllkammer |
| 32 | Füllrohr |
| 34 | Druckeinrichtung |
| 36 | Obere Vordruckrolle |
| 38 | Untere Vordruckrolle |
| 40 | Obere Hauptdruckrolle |
| 42 | Untere Hauptdruckrolle |
| 44 | Auswurfeinrichtung |
| 46 | Abstreifeinrichtung |
| 48 | Tabletten |
| 50 | Ablaufeinrichtung |
| 52 | Produkteinlass |
| 54 | Produkteinlass |
| 56 | Mischeinrichtung |
| 58 | Zuführleitung |
| 60 | Auswerte- und Steuereinrichtung |
| 62 | Pfeil |
| 64 | Pfeil |
| 66 | Vergleichseinrichtung |
| 68 | Pfeil |
| 70 | Pfeil |

## Patentansprüche

1. Verfahren zum Betreiben einer Mischeinrichtung (56) einer Anlage, in der pulverförmiges Produkt zu Erzeugnissen verarbeitet wird, wobei der Mischeinrichtung (56) unterschiedliche pulverförmige Produkte zugeführt werden, und wobei die unterschiedlichen Produkte in der Mischeinrichtung (56) vor dem Verarbeiten zu Erzeugnissen zu einem gemischten Produkt gemischt werden, wobei der in die Mischeinrichtung (56) fließende Produkteinlassmassenstrom gemessen wird, **dadurch gekennzeichnet, dass** weiterhin das Gewicht des in der Mischeinrichtung (56) befindlichen Produkts gemessen wird, und dass aus dem gemessenen Produkteinlassmassenstrom anhand eines mathematischen Modells das Gewicht des in der Mischeinrichtung (56) befindlichen Produkts und der aus der Mischeinrichtung (56) fließende Produktauslassmassenstrom vorhergesagt werden, und dass bei Abweichungen zwischen den Vorhersagen für das Gewicht des in der Mischeinrichtung befindlichen Produkts und den entsprechenden Messwerten eine Korrektur der anhand des mathematischen Modells erstellten Vorhersage des Produktauslassmassenstroms anhand des gemessenen Gewichts des in der Mischeinrichtung (56) befindlichen Produkts erfolgt.

2. Verfahren nach Anspruch 1, **dadurch gekennzeichnet, dass** die Vorhersage des Gewichts des in der Mischeinrichtung (56) befindlichen Produkts und des Produktauslassmassenstroms sowie die Korrektur der Vorhersage des Produktauslassmassenstroms in Echtzeit erfolgen.

3. Verfahren nach einem der vorhergehenden Ansprüche, **dadurch gekennzeichnet, dass** die Korrektur der anhand des mathematischen Modells erstellten Vorhersage des Produktauslassmassenstroms mittels der Methode der kleinsten Quadrate erfolgt.

4. Verfahren nach einem der vorhergehenden Ansprüche, **dadurch gekennzeichnet, dass** die Vorhersage des Gewichts des in der Mischeinrichtung (56) befindlichen Produkts und des Produktauslassmassenstroms sowie die Korrektur der Vorhersage des Produktauslassmassenstroms mittels eines Kalman-Filter-Verfahrens erfolgt.

5. Verfahren nach einem der vorhergehenden Ansprüche, **dadurch gekennzeichnet, dass** die unterschiedlichen Produkte der Mischeinrichtung (56) über mehrere Produkteinlässe (52, 54) der Anlage zugeführt werden.

6. Verfahren nach Anspruch 5, **dadurch gekennzeichnet, dass** die Produkteinlässe (52, 54) jeweils mindestens eine Dosierzuführeinrichtung umfassen, insbesondere eine Loss-In-Weight-Dosierzuführeinrichtung.

7. Verfahren nach einem der vorhergehenden Ansprüche, **dadurch gekennzeichnet, dass** die Anlage eine Anlage zur Tablettenherstellung ist, wobei das aus der Mischeinrichtung (56) kommende gemischte Produkt in einer Tablettenpresse der Anlage zu Tabletten (48) verpresst wird.

8. Verfahren nach einem der vorhergehenden Ansprüche, **dadurch gekennzeichnet, dass** die Anlage eine Anlage zur Kapselherstellung ist, wobei das aus der Mischeinrichtung (56) kommende gemischte Produkt in einer Kapselfüllmaschine in Kapseln gefüllt wird.

9. Verfahren nach einem der vorhergehenden Ansprüche, **dadurch gekennzeichnet, dass** auf Grundlage der gemessenen Werte des Produkteinlassmassenstroms und des Gewichts des in der Mischeinrichtung (56) befindlichen Produkts sowie der korrigierten Vorhersage des Produktauslassmassenstroms der Fortgang des Produkts in der Mischeinrichtung (56) und/oder der Anlage verfolgt wird.

10. Verfahren nach Anspruch 9, **dadurch gekennzeichnet, dass** zur Verfolgung des Fortgangs des Produkts das in die Mischeinrichtung (56) eintretende Produkt anhand der gemessenen Werte des Produkteinlassmassenstroms in Masseeinheiten aufgeteilt wird, wobei der Fortgang der Masseeinheiten in der Mischeinrichtung (56) anhand der korrigierten Vorhersage des Produktauslassmassenstroms verfolgt wird.

11. Verfahren nach den Ansprüchen 5 und 10, **dadurch gekennzeichnet, dass** die über die Produkteinlässe (52, 54) zugeführten Produkte anhand von Messdaten von an den Produkteinlässen (52, 54) angeordneten Einlassmassesensoren in Masseeinheiten aufgeteilt werden, und dass der Fortgang der Masseeinheiten in der Anlage anhand von Messdaten mindestens eines weiteren Massesensors der Anlage verfolgt wird.

12. Verfahren nach Anspruch 7 und einem der Ansprüche 10 oder 11, **dadurch gekennzeichnet, dass** der Fortgang der Masseeinheiten in der Anlage anhand von Messdaten eines an einem Tablettenauslass der Tablettenpresse angeordneten weiteren Massesensors verfolgt wird.

13. Verfahren nach einem der Ansprüche 10 bis 12, **dadurch gekennzeichnet, dass** die Massen der Masseeinheiten gleich sind.

14. Verfahren nach einem der Ansprüche 10 bis 13, **dadurch gekennzeichnet, dass** die Masse der Masseeinheiten in einem Bereich von 1 g bis 20 g, vorzugsweise in einem Bereich von 1 g bis 10 g, liegt.

15. Verfahren nach einem der vorhergehenden Ansprüche, **dadurch gekennzeichnet, dass** die Anlage eine Anlage zur kontinuierlichen Verarbeitung des pulverförmigen Produkts zu Erzeugnissen ist und/oder dass die Anlage eine Containment-Anlage ist.

## Claims

1. A method for operating a mixing apparatus (56) of a system, in which powdered product is processed into end products, wherein the mixing apparatus (56) is fed different powdered products, and wherein the different products are mixed in the mixing apparatus (56) to form a mixed product before being processed into end products, wherein the product inlet mass flow flowing into the mixing apparatus (56) is measured, **characterized in that** the weight of the product located in the mixing apparatus (56) is also measured, and **in that** the weight of the product located in the mixing apparatus (56) and the product outlet mass flow flowing out of the mixing apparatus (56) are predicted from the measured product inlet mass flow using a mathematical model, and **in that**, in the event of deviations between the predictions for the weight of the product located in the mixing apparatus and the corresponding measured values, a correction of the product outlet mass flow prediction created using the mathematical model takes place using the measured weight of the product located in the mixing apparatus (56).

2. The method according to claim 1, **characterized in that** the prediction of the weight of the product located in the mixing apparatus (56) and of the product outlet mass flow as well as the correction of the product outlet mass flow prediction take place in real time.

3. The method according to one of the preceding claims, **characterized in that** the correction of the product outlet mass flow prediction created using the mathematical model takes place by means of the least squares method.

4. The method according to one of the preceding claims, **characterized in that** the prediction of the weight of the product located in the mixing apparatus (56) and of the product outlet mass flow as well as the correction of the product outlet mass flow prediction take place by means of a Kalman filter method.

5. The method according to one of the preceding claims, **characterized in that** the different products are fed to the mixing apparatus (56) via multiple product inlets (52, 54) of the system.

6. The method according to claim 5, **characterized in that** the product inlets (52, 54) each comprise at least one dosing feeder, in particular a loss-in-weight dosing feeder.

7. The method according to one of the preceding claims, **characterized in that** the system is a tablet production system, wherein the mixed product coming out of the mixing apparatus (56) is pressed into tablets (48) in a tablet press of the system.

8. The method according to one of the preceding claims, **characterized in that** the system is a capsule production system, wherein the mixed product coming out of the mixing apparatus (56) is filled into capsules in a capsule filling machine.

9. The method according to one of the preceding claims, **characterized in that** the progress of the product in the mixing apparatus (56) and/or system is tracked based on the measured values for the product inlet mass flow and the weight of the product located in the mixing apparatus (56) as well as on the corrected product outlet mass flow prediction.

10. The method according to claim 9, **characterized in that**, to track the progress of the product, the product entering the mixing apparatus (56) is split into mass units using the measured values for the product inlet mass flow, wherein the progress of the mass units in the mixing apparatus (56) is tracked using the corrected product outlet mass flow prediction.

11. The method according to claims 5 and 10, **characterized in that** the products fed via the product inlets (52, 54) are split into mass units using measurement data from inlet mass sensors arranged at the product inlets (52, 54), and **in that** the progress of the mass units in the system is tracked using measurement data of at least one further mass sensor of the system.

12. The method according to claim 7 and one of claims 10 or 11, **characterized in that** the progress of the mass units in the system is tracked using measurement data of a further mass sensor arranged at a tablet outlet of the tablet press.

13. The method according to one of claims 10 to 12, **characterized in that** the masses of the mass units are equal.

14. The method according to one of claims 10 to 13, **characterized in that** the mass of the mass units is in a range of from 1 g to 20 g, preferably in a range of from 1 g to 10 g.

15. The method according to one of the preceding claims, **characterized in that** the system is a system for continuously processing the powdered product into end products and/or **in that** the system is a containment system.

**Revendications**

1. Procédé de fonctionnement d'un dispositif de mélange (56) d'une installation, dans laquelle un produit pulvérulent est transformé en articles, dans lequel différents produits pulvérulents sont alimentés vers le dispositif de mélange (56), et dans lequel les différents produits sont mélangés dans le dispositif de mélange (56) de manière à obtenir un produit mélangé avant la transformation en articles, dans lequel le flux massique d'entrée de produit s'écoulant dans le dispositif de mélange (56) est mesuré, **caractérisé en ce que** le poids du produit présent dans le dispositif de mélange (56) est également mesuré, et **en ce que** le poids du produit présent dans le dispositif de mélange (56) ainsi que le flux massique de sortie de produit s'écoulant hors du dispositif de mélange (56) sont anticipés à l'aide d'un modèle mathématique à partir du flux massique d'entrée de produit mesuré, et **en ce qu'**en cas d'écarts entre les prévisions pour le poids du produit présent dans le dispositif de mélange et les valeurs de mesure correspondantes, une correction de la prévision du flux massique de sortie de produit établie à l'aide du modèle mathématique est effectuée à l'aide du poids mesuré du produit présent dans le dispositif de mélange (56).

2. Procédé selon la revendication 1, **caractérisé en ce que** la prévision du poids du produit présent dans le dispositif de mélange (56) et du flux massique de sortie de produit ainsi que la correction de la prévision du flux massique de sortie de produit sont effectuées en temps réel.

3. Procédé selon l'une des revendications précédentes, **caractérisé en ce que** la correction de la prévision du flux massique de sortie de produit établie à l'aide du modèle mathématique est effectuée à l'aide de la méthode des moindres carrés.

4. Procédé selon l'une des revendications précédentes, **caractérisé en ce que** la prévision du poids du produit présent dans le dispositif de mélange (56) et du flux massique de sortie de produit ainsi que la correction de la prévision du flux massique de sortie de produit sont effectuées au moyen d'un procédé de filtrage de Kalman.

5. Procédé selon l'une des revendications précédentes, **caractérisé en ce que** les différents produits du dispositif de mélange (56) sont alimentés vers l'installation par le biais de plusieurs entrées de produit (52, 54).

6. Procédé selon la revendication 5, **caractérisé en ce que** les entrées de produit (52, 54) comportent respectivement au moins un dispositif d'alimentation à dosage, en particulier un dispositif d'alimentation à dosage par perte de poids.

7. Procédé selon l'une des revendications précédentes, **caractérisé en ce que** l'installation est une installation de fabrication de comprimés, dans lequel le produit mélangé provenant du dispositif de mélange (56) est compressé en comprimés (48) dans une presse à comprimés de l'installation.

8. Procédé selon l'une des revendications précédentes, **caractérisé en ce que** l'installation est une installation de fabrication de gélules, dans lequel le produit mélangé provenant du dispositif de mélange (56) est rempli dans des gélules dans une machine de remplissage de gélules.

9. Procédé selon l'une des revendications précédentes, **caractérisé en ce que** l'évolution du produit dans le dispositif de mélange (56) et/ou dans l'installation est suivie sur la base des valeurs mesurées du flux massique d'entrée de produit et du poids du produit présent dans le dispositif de mélange (56) ainsi que de la prévision corrigée du flux massique de sortie de produit.

10. Procédé selon la revendication 9, **caractérisé en ce que** pour le suivi de l'évolution du produit, le produit entrant dans le dispositif de mélange (56) est divisé en unités massiques à l'aide des valeurs mesurées du flux massique d'entrée de produit, dans lequel l'évolution des unités massiques dans le dispositif de mélange (56) est suivie à l'aide de la prévision corrigée du flux massique de sortie de produit.

11. Procédé selon les revendications 5 et 10, **caractérisé en ce que** les produits alimentés par le biais des entrées de produit (52, 54) sont divisés en unités massiques à l'aide de données de mesure de capteurs massiques d'entrée disposés au niveau des entrées de produit (52, 54), et **en ce que** l'évolution des unités massiques dans l'installation est suivie à l'aide de données de mesure d'au moins un autre capteur massique de l'installation.

12. Procédé selon la revendication 7 et l'une des revendications 10 ou 11, **caractérisé en ce que** l'évolution des unités massiques dans l'installation est suivie à l'aide de données de mesure d'un autre capteur massique disposé au niveau d'une sortie de comprimés de la presse à comprimés.

13. Procédé selon l'une des revendications 10 à 12, **caractérisé en ce que** les masses des unités massiques sont égales.

14. Procédé selon l'une des revendications 10 à 13, **caractérisé en ce que** la masse des unités massiques est comprise dans une plage de 1 g à 20 g, de préférence dans une plage de 1 g à 10 g.

15. Procédé selon l'une des revendications précédentes, **caractérisé en ce que** l'installation est une installation de transformation continue du produit pulvérulent en articles et/ou **en ce que** l'installation est une installation de confinement.

Fig. 1

Fig. 2

**IN DER BESCHREIBUNG AUFGEFÜHRTE DOKUMENTE**

**In der Beschreibung aufgeführte Patentdokumente**

- US 5114630 A

- US 5132897 A